**Europäisches Patentamt**

**European Patent Office**

**Office européen des brevets**

(19)

(11) Veröffentlichungsnummer: **0 004 001**
**B1**

(12) **EUROPÄISCHE PATENTSCHRIFT**

(45) Veröffentlichungstag der Patentschrift: **13.01.82**

(51) Int. Cl.³: **H 01 Q 1/32**

(21) Anmeldenummer: **79100532.5**

(22) Anmeldetag: **23.02.79**

(54) Scheibenantenne zum Einbau in eine Fahrzeugkarosserie.

(30) Priorität: **04.03.78 DE 2809454**

(43) Veröffentlichungstag der Anmeldung:
**19.09.79 Patentblatt 79/19**

(45) Bekanntmachung des Hinweises auf die Patenterteilung:
**13.01.82 Patentblatt 82/2**

(84) Benannte Vertragsstaaten:
**BE DE FR GB IT SE**

(56) Entgegenhaltungen:
**DE - A - 1 936 780**
**DE - A - 1 958 496**
**DE - A - 2 000 655**
**DE - A - 2 014 641**
**DE - A - 2 106 647**
**DE - A - 2 440 439**
**DE - A - 2 635 217**
**DE - A - 2 639 947**
**DE - C - 2 301 291**
**DE - U - 6 911 586**
**DE - U - 7 010 571**
**FR - A - 2 258 015**

(73) Patentinhaber: **SAINT-GOBAIN INDUSTRIES**
**62, Bd Victor Hugo**
**F-92209 Neuilly sur Seine (FR)**
(84) **BE FR GB IT SE**
(73) Patentinhaber: **Vereinigte Glaswerke GmbH**
**Viktoriaallee 3-5**
**D-5100 Aachen (DE)**
(84) **DE**

(72) Erfinder: **Roentgen Paul, Ing.**
**Talweg 7**
**5101 Rott/Roetgen (DE)**
Erfinder: **Nuding Werner, Ing.**
**Lindenweg 15**
**5100 Aachen (DE)**
Erfinder: **Sauer Gerd, Ing.**
**Karl-Friedrich-Strasse 25**
**5100 Aachen (DE)**

(74) Vertreter: **Biermann, Wilhelm, Dr.-Ing.**
**Compagnie de Saint-Gobain-Pont-A-Mousson**
**Zweigniederlassung Deutschland Postfach 14 90**
**Oppenhoffallee 143**
**D-5100 Aachen (DE)**

Courier Press, Leamington Spa, England.

(56) Entgegenhaltungen:
    FR - A - 2 286 560
    US - A - 4 063 247

Funkschau 1972, Band 44, Heft 2
H.  Klüth  "Die  Autoantenne  auf  der
Windschutzscheibe"
Seite 37 bis 40

Nachrichtentechn. Zeitschrift (NTZ), 1974, Heft
1  H.  Kindenmeier  "Wirkungsweise  und
Leistungsvermögen moderner Autoantennen"
Seite 23, Spalte 2, Zeilen 19 und ff.

### Scheibenantenne zum Einbau in eine Fahrzeugkarosserie

Die Erfindung betrifft eine Scheibenantenne zum Einbau in eine Fahrzeugkarosserie, mit einem T-förmigen resonanzabgestimmten Antennenleiter, dessen horizontaler Teil im oberen Bereich der Scheibe angeordnet ist, und mit einem durch die Scheibe bzw. durch eine Schicht der Scheibe von dem Antennenleiter galvanisch getrennten Heizwiderstand mit Anschlußkabeln.

Eine Scheibenantenne Dieser Art ist aus der DE—A—20 14 641 bekannt. Sie besteht aus Verbundglas, das heißt aus zwei über eine thermoplastische Zwischenschicht miteinander verbundenen Einzelglasscheiben. Der T-förmige resonanzabgestimmte Antennenleiter ist auf der dem Wageninnern zugewandten Oberfläche der Scheibe, und der Heizwiderstand in Form von Widerstandsdrähten in der thermoplatischen Zwischenschicht angeordnet.

In der DE—U—69 11 586 ist ferner eine auf einem Autofenster anzubrigende Scheibe beschrieben, bei der im unteren Teil ein Heizwiderstand in Form eines mäanderförmig hin und hergeführten Heizleiters angeordnet ist, während im oberen Teil der Scheibe waagerechte Antennenleiter angebracht sind.

Der Erfindung liegt die Aufgabe zugrunde, eine mit einem Heizwiderstand versehene Scheibenantenne der eingangs gennanten Art so auszubilden, daß der Nutzsignalpegel der Antenne erhöht wird.

Gemäß der Erfindung wird diese Aufgabe dadurch gelöst, daß der sich in horizontaler Richtung im wesentlichen über die gesamte Scheibenbreite erstreckende Heizwiderstand zur Erhöhung der Resonanzgüte der Fensteröffnung in der Fahrzeugkarosserie im unteren Teil der Scheibe angeordnet ist, daß das zur Karosserie führende Anschlußkabel des Heizwiderstandes möglichst kurz ist, und daß die Länge des zur Batterie führenden Anschlußkabels des Heizwiderstandes so gewählt wird, daß eine Verschiebung der Resonanzfrequenz der Fensteröffnung in den Bereich des gewünschten Frequenzbandes erzielt wird.

Durch die erfingungsgemäß ausgebildete Scheibenantenne wird im Vergleich zu den bekannten Scheibenantennen der Störabstand vergrößert und eine merkliche Erhöhung des Nutzsignalpegels erreicht. Dieser Effekt läßt sich wie folgt erklären:

Auf oder in einer Autoscheibe angeordnete Antennenleiter stellen, wenn die Scheibe im Fahrzeug eingebaut ist, nicht unmittelbar die Primärantenne dar, sondern erhalten ihre charakteristischen Eigenschaften in Zusammenwirken mit der Karosserie des Fahrzeugs. Sie wirken gewissermaßen als Sekundärantenne in einer von der Fensteröffnung der Karosserie gebildeten Schlitzantenne, wobei die von dieser als Primärantenne wirkenden Schlitzantenne aufgenommene elektrische Energie auf die Sekundärantenne, nämlich die Antennenleiter auf bzw. in der Scheibe, aufgekoppelt wird.

Die Wirksamkeit einer solchen Scheibenantenne im FM-Bereich wird infolgedessen, wie durch Messungen bestätigt wurde, mit zunehmender Höhe der Fensteröffnung geringer. Die Anordnung des Heizfeldes im unteren Teil der Scheibe wirkt sich hochfrequenzmäßig so aus, als ob dadurch die Höhe der Fensteröffnung um dieses Maß verringert würde.

Während die Resonanzabstimmung der Sekundärantenne, d.h. des Antennenleiters auf der Scheibe, üblich ist, konnte bisher die Resonanzstelle der Primärantenne, nämlich der Fahrzeugkarosserie bzw. genauer gesagt, der Fensteröffnung, nicht beeinflußt werden, sondern war vielmehr dem Zufall überlassen. Erfahrungen mit verschiedenen Fahrzeugtypen zeigen, daß die Resonanzfrequenz der üblichen Windschutzscheibenöffnungen mehr oder weniger oberhalb des FM-Bereichs liegt, wodurch sich ein Leistungsabfall zu den niedrigen Frequenzen ergibt. Zwar kann man diesen Abfall durch Verstimmen der Sekundärantenne zu tieferen Frequenzen kompensieren, jedoch nur unter Inkaufnahme von Verlusten im oberen Frequenzbereich.

Durch die erfindungsgemäße Anordnung der Heizleiter im unteren Teil der Scheibe und durch gezielte Wahl bzw. Veränderung der Länge der Anschlußkabel für den Heizwiderstand kann man aber nunmehr Einfluß auf die Resonanzfrequenz der Karosserie nehmen, ohne an der Karosserie selbst Änderungen vorzunehmen. Dabei ist es wichtig, daß für die Wirksamkeit der Primärantenne das Verhältnis Höhe: Breite der Fensteröffnung entscheidend ist, wobei die Wirksamkeit umso größer ist, je größer die Breite und je geringer die Höhe der Fensteröffnung ist. Je geringer die Höhe der Fensteröffnung ist, desto ausgeprägter ist die Resonanzstelle der Karosserie in dem interessierenden Frequenzband.

Die Erfindung gestattet es also, in gezielter Weise eine Verschiebung der Resonanzfrequenz der Fensteröffnung in den Bereich des gewünschten Frequenzbandes zu erreichen. Messungen haben ergeben, daß sich durch die erfindungsgemäße Anordnung die Wirksamkeit der Antenne um einige dB verbessern läßt.

Die im Sinne der Erfindung wirksame Länge des zur Batterie führenden Anschlußkabels des Heizwiderstandes kann sowohl durch Verkürzung oder Verlängerung des hochfrequenzmäßig wirksamen Teils des Kabels, als auch in äquivalenter Weise durch Zuschalten von Induktivitäten oder Kapazitaten eingestellt werden.

In zweckmäßiger Weiterbildung der Efindung sind die Heizleiter im untersten Drittel der Scheibe angeordnet. Damit läßt sich in der Regel bereits eine in den meisten Fällen ausreichende Optimierung der durch die Fensteröffnung gebildeten Schlitzantenne erreichen.

Gemäß einer weiteren vorteilhaften Ausführungsform is vorgesehen, daß am Ende der unter dem Gesichtspunkt der Resonanzabstimmung optimalen Länge des zur Batterie führenden Anschlußkabels ein Kondensator angeordnet wird, der auf der anderen Seite mit der Karosserie verbunden wird. Auf diese Weise wird die hochfrequenzmäßig wirksame Länge dieses Anschlußkabels konstant gehalten unabhängig davon, ob der Schalter geöffnet oder geschlossen ist.

Da durch die unterschiedliche Länge der Anschlußkabel das Heizwiderstandssystem elektrisch asymmetrisch ausgebildet ist, werden heirdurch gleichzeitig die Rundempfangseigenschaften der Antenne verbessert. Die Verbesserung der Rundempfangscharakteristik der Antennenleiter auf der Scheibe durch eine asymmetrische Geometrie ist aus der DE—C—23 01 291 bekannt. Diese bekannten Maßnahmen können nunmehr durch die erfindungsgemäße asymmetrische Anordnung des Heizfeldes wirkungsvoll unterstützt werden. Messungen haben gezeigt, daß auf diese Weise eine beachtliche Auffüllung der Leistungsminima möglich ist.

Weitere vorteilhafte Ausgestaltungen der Erfindung sind Gegenstand der Unteransprüche.

Mit besonderem Vorteil wird die erfindungsgemäße Scheibenantenne als Windschutzscheibe eingesetzt. Infolgedessen ist als bevorzugte Ausführungsform in der nachfolgenden Beschreibung und in den Zeichnungen eine Windschutzscheibe dargestellt.

Von den Zeichnungen zeigt

Fig. 1 eine Ansicht einer heizbaren Antennen-Windschutzscheibe;

Fig. 2 einen Ausschnitt II des Heizfeldes in vergrößerter Darstellung, und

Fig. 3 einen senkrechten Schnitt entlang der Linie III—III in Fig. 1.

Die Antennenscheibe besteht aus der äußeren Silikatglasscheibe 1 mit einer Dicke von 2,2 bis 3,0 mm, der inneren Silikatglasscheibe 2 mit einer Dicke von etwa 1,2 bis 2,6 mm und der thermoplastischen Zwischenschicht 3, beispielsweise aus einer 0,76 mm dicken Folie aus Polyvinylbutyral. Diese drei Schichten sind in der bekannten Weise zu einer Verbundglasscheibe vereinigt.

Im unteren Drittel der Scheibe sind in horizontaler Richtung verlaufend den Heizwiderstand 4 bildende Drähte angeordnet, und mit den im Bereich der unteren Ecken der Scheibe angeordneten Sammelschienen 5, 6 leitend verbunden. Das Anschlußkabel 7 wird auf kürzestem Weg mit der Karosserie, das Anschlußkabel 8 über den Schalter 14 mit dem Pluspol der Batterie verbunden.

Während die Grundabstimmung der Karosserie durch das Heizfeld selbst gegeben ist, wird eine weitere Korrektur vorgenommen durch die Länge des Anschlußkabels 8. Dabei ist es zweckmäßig, daß die elektrische Länge des Anschlußkabels 8 unabhängig vom Einschaltzustand des Heizwiderstandes konstant gehalten wird. Das läßt sich am besten dadurch realisieren, daß man an der zuvor ermittelten optimalen Stelle das Kabel 8 über einen induktionsarmen Kondensator 15 mit der Karosserie verbindet. Der Kondensator 15 kann eine Größe von $2\mu F$ aufweisen; er dient außerdem zur Ausfilterung von Störspannungen.

Der Anschlußpunkt für den Kondensator 15 auf dem Kabel 8 wird so gewählt, daß die Resonanzfrequenz der Karosserie etwa in die Mitte des FM-Frequenzbandes gelegt wird. Die optimale Stelle des Anschlußpunktes ist von der Karosserie und dem Heizfeld abhängig. Sie wird für jeden Karosserietyp empirisch ermittelt.

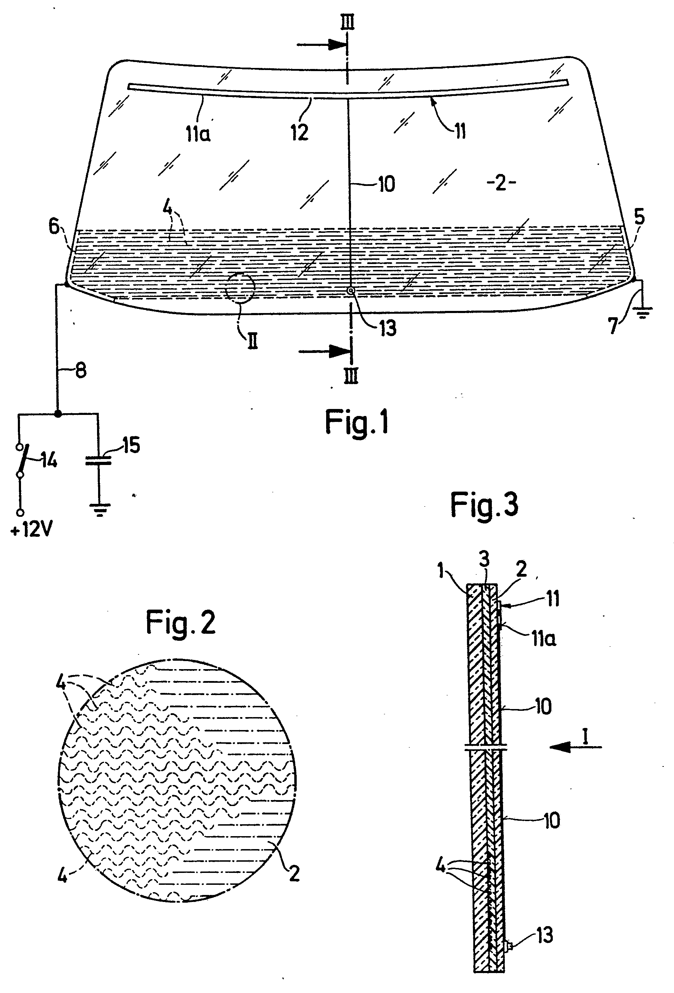

Die den Heizwiderstand 4 bildenden Drähte werden vor dem Zusammenlegen der einzelnen Schichten auf der thermoplastischen Folie 3 fixiert, und dringen beim Verbinden der Einzelschichten in die Zwischenschicht oberflächlich ein. Um spezifische Hiezleistungen von 3 bis 10 $W/dm^2$ zu erzielen, werden 0,02 bis 0,04 mm dicke Drähte aus Wolfram mit einem Widerstand von etwa 40 bis 400 Ohm/m parallel zueinander in Wellenform verlegt, wie es aus Fig. 2 hervorgeht. Der Abstand der Drähte voneinander beträgt je nach spezifischer Heizleistung 1,5 bis 5 mm, die Wellenlänge 2 bis 6 mm und die Amplitude der Wellen 1,5 bis 3 mm. Die Heizwiderstandsdrähte sind bevorzugt auf der der äußberen Glasscheibe 1 zugewandten Oberfläche der Zwischenschicht 3 angeordnet.

Auf der freien Oberfläche der im eingebauten Zustand dem Fahrgastraum Zugewandten Silikatglasscheibe 2 ist der Antennenleiter aufgebracht, der aus dem vertikalen Mittelleiter 10 und dem horizontalen Leiter 11 besteht. Der horizontale Leiter 11 ist vorzugsweise als Mehrfachleiter oder in Form einer Schleife ausgebildet. Der untere Leiter 11a kann eine asymmetrisch angeordnete Unterbrechung 12 aufweisen. Durch die Wahl der Lage dieser Unterbrechung 12 kann man die Richtungsabhängigkeit der Empfangseigenschaften günstig beeinflussen. Am unteren Ende des Mittelleiters 10 ist ein Anschlußelement 13 angeordnet, an das das zu einem Antennenverstärker führende Verbindungskabel angeschlossen wird.

**Patentansprüche**

1. Scheibenantenne zum Einbau in eine Fahrzeugkarosserie mit einem T-förmigen resonanzabgestimmten Antennenleiter, dessen horizontaler Teil im oberen Teil der Scheibe angeordnet ist, und mit einem durch die Scheibe bzw. durch eine Schicht der Scheibe von dem Antennenleiter galvanisch getrennten Heizwiderstand (4) mit Anschlußkabeln (7,8), dadurch gekennzeichnet, daß der sich in horizontaler Richtung im wesentlichen über die gesamte Scheibenbreite erstreckende Heizwinderstand (4) zur Erhöhung der Resonanzgüte der Fensteröffnung in der Fahrzeugkarosserie im unteren Teil der Scheibe angeordnet ist, daß das zur Karosserie führende Anschlußkabel (7) des Heizwiderstandes (4) möglichst kurz ist, und daß die Länge des zur Batterie führenden Anschlußkabels (8) des Heizwiderstandes (4) so gewählt wird, daß eine Verschiebung der Resonanzfrequenz der Fensteröffnung in den Bereich des gewünschten Frequenzbandes erzielt wird.

2. Scheibenantenne nach Anspruch 1, dadurch gekennzeichnet, daß der sich in horizontaler Richtung im wesentlichen über die gesamte Scheibenbreite erstreckende Heizwiderstand (4) im untersten Drittel der Scheibe angeordnet ist.

3. Scheibenantenne nach Anspruch 1 und 2, dadurch gekennzeichnet, daß die für die Verschiebung der Resonanzfrequenz der Fensteröffnung wirksame Länge des zur Batterie führenden Anschlußkabels (8) durch einen auf der anderen Seite mit der Karosserie verbundenen Kondensator (15) bestimmt wird.

4. Scheibenantenne nach einem der Ansprüche 1 bis 3, dadurch gekennzeichnet, daß die Antennenleiter (10, 11) Teil einer aktiven Antenne sind.

5. Scheibenantenne nach einem der Ansprüche 1 bis 4, gekennzeichnet durch eine monolithische Glasscheibe, auf deren einer Oberfläche der Heizwiderstand, und auf deren anderer Oberfläche die Antennenleiter angeordnet sind.

6. Scheibenantenne nach einem der Ansprüche 1 bis 4, gekennzeichnet durch eine Verbundglasscheibe, bei der der Heizwiderstand auf der einen, und die Antennenleiter auf der anderen Seite der thermoplastischen Zwischenschicht angeordnet sind.

7. Scheibenantenne nach einem der Ansprüche 1 bis 4, gekennzeichnet durch eine Verbundglasscheibe, bei der der Heizwiderstand (4) innerhalb der thermoplastischen Zwischenschicht (3) oder auf einer der thermoplastischen Zwischenschicht (3) benachbarten Oberfläche einer der beiden Silikatglasscheiben (1, 2), und die Antennenleiter (10, 11) auf der dem Wageninnern zugekehrten Oberfläche der Verbundglasscheibe angeordnet sind.

8. Scheibenantenne nach einem der Ansprüche 1 bis 7, dadurch gekennzeichnet, daß die Antennenleiter (10, 11) aus einer aufgedruckten und in die Glasoberfläche eingebrannten Leitsilberzusammensetzung bestehen.

9. Scheibenantenne nach einem der Ansprüche 1 bis 8, dadurch gekennzeichnet, daß der Heizwiderstand aus einer transparenten, ggf. mehrschichtigen Metall-, Metalloxid- oder Halbleiterschicht besteht.

10. Scheibenantenne nach einem der Ansprüche 1 bis 9, dadurch gekennzeichnet, daß der Heizwiderstand aus in Wellenform angeordneten Drähten (4) besteht.

## Claims

1. A vehicle window antenna designed to be fixed in a vehicle body and having a T-like tuned conductor, whose horizontal part is placed in the top part of the window, and with a heating resistor (4) separated galvanically by the window or a layer thereof from the antenna conductor, and having connection leads (7, 8), characterized in that the heating resistor (4), running horizontally generally over the full width of the window, is placed in the lower part of the window for producing better resonant properties of the window opening in the vehicle body, in that the connection lead (7) running to the body work, of the heating resistor (4) is made as short as possible and in that the length of the connection lead (8), running to the battery, of the heating resistor (4) is so designed that the resonant frequency of the window opening is changed so as to be in the range of the desired frequency band.

2. A vehicle window antenna as claimed in claim 1, characterized in that the heating resistor (4), running horizontally generally over the full breadth of the window is placed in the lowest third of the window.

3. A vehicle window antenna as claimed in claims 1 and 2, characterized in that the length of the connection lead (8), joined up with the battery, which is responsible for changing the resonant frequency of the window opening, is tuned by way of a capacitor (15) which is joined up with the body on the other side.

4. A vehicle window antenna as claimed in anyone of claims 1 to 3, characterized in that the antenna conductors (10, 11) are part of an active antenna.

5. A vehicle window antenna as claimed in anyone of claims 1 to 4, characterized in that the window is made from a single piece of glass having the heating resistor fixed on one face thereof and the antenna conductors fixed on the other face thereof.

6. A vehicle window antenna as claimed in any one of claims 1 to 4, characterized in that the window is laminated glass and the heating resistor is placed on one side of the thermoplastic inbetween layer and the antenna conductors are placed on the other side thereof.

7. A vehicle window antenna as claimed in anyone of claims 1 to 4, characterized by a laminated glass window in the case of which the heating resistor (4) is placed within the thermoplastic inbetween layer (3) or on a side, next to the thermoplastic inbetween layer (3), of one of the two silicate glass sheets (1, 2) and the antenna conductors (10, 11) are placed on the side of the laminated glass window facing the inside of the vehicle.

8. A vehicle window antenna as claimed in anyone of claims 1 to 7, characterized in that the antenna conductors (10, 11) are made up of a conducting silver material which is printed onto the glass and fused onto the outer face thereof.

9. A vehicle window antenna as claimed in anyone of claims 1 to 8, characterized in that the heating resistor is made up of one or more glass-clear layers of metal, metal oxide or semiconductor.

10. A vehicle window antenna as claimed in anyone of claims 1 to 9, chatacterized in that the heating resistor is made up of wiring (4) in the form of waves.

## Revendications

1. Vitrage antenne à incorporer à une carrosserie de véhicule comportant un conducteur d'antenne accordé en résonance en forme de T, dont la partie horizontale est disposée dans la région supérieure du vitrage et comportant une résistance chauffante qui est séparée électriquement du conducteur d'antenne par le vitrage ou par une couche de celui-ci et qui est pourvue de câbles de connexion (7,8), caracterisé en ce que la résistance chauffante (4), qui dans le sens horizontal s'étend en substance sur toute la largeur du vitrage, est disposée dans la partie inférieure de ce vitrage afin d'augmenter la qualité de résonance de la baie de fenêtre existant dans la carrosserie du véhicule, le câble de connexion (7) de la résistance chauffante (4) à la carrosserie étant le plus court possible et la longueur du câble de connexion (8) de la résistance chauffante (4) à la batterie ètant choisie de facon à déplacer la fréquence de résonance de la baie de fenêtre jusque dans le domaine de la bande de fréquence souhaitée.

2. Vitrage antenne suivant la revendication 1, caractérisé en ce que la résistance chauffante (4), qui dans le sens horizontal s'étend en substance sur toute la largeur du vitrage, est disposée dans le tiers inférieur du vitrage.

3. Vitrage antenne suivant les revendications 1 et 2, caractérisé en ce que la longueur du câble de connexion (8) à la batterie intervenant pour le déplacement de la fréquence de résonance de la baie de fenêtre est déterminée par un condensateur (15) connecté sur son autre borne à la carrosserie.

4. Vitrage antenne suivant l'une quelconque des revendications 1 à 3, caractérisé en ce que les conducteurs d'antenne (10, 11) font partie d'une antenne active.

5. Vitrage antenne suivant l'une quelconque des revendications 1 à 4, caractérisé par une vitre monolithique sur une surface de laquelle est déposée la résistance chauffante et sur l'autre surface de laquelle sont déposés les conducteurs d'antenne.

6. Vitrage antenne suivant l'une quelconque des revendications 1 à 4, caractérisé par une vitre feuilletée dans laquelle la résistanve chauffante est disposée d'un côté et les conducteurs d'antenne de l'autre côté de la couche ou épaisseur intercalaire en matiére thermoplastique.

7. Vitrage antenne suivant l'une quelconque des revendications 1 à 4, caractérisé par une vitre feuilletée dans laquelle la résistance chauffante (4) est disposée à l'intérieur de l'épaisseur ou couche intercalaire (3) en matiére thermplastique ou sur une des surfaces voisines de la couche intercalaire en matiére therm-plastique (3) d'une des deux feuilles de verre au silicate (1, 2) et les conducteurs d'antenne (10, 11) sont disposés sue la surface de la vitre feuilletée tournée vers l'intérieur du véhicule.

8. Vitrage antenne suivant l'une quelconque des revendications 1 à 7, caractérisé en ce que les conducteurs d'antenne (10, 11) sont constitués d'une composition d'argent conductrice imprimée et cuite dans la surface du verre.

9. Vitrage antenne suivant l'une quelconque des revendications 1 à 8, caractérisé en ce que la résistance chauffante est faite d'une couche transparente ou multiple de métal, d'oxyde métallique ou de matiére semi-conductrice.

10. Vitrage antenne suivant l'une quelconque des revendications 1 à 9, caractérisé en ce que la résistance chauffante est constituée de fils (4) disposés selon un trajet ondulé.

Fig.1

Fig.2

Fig.3

+12V